(19) **Europäisches Patentamt / European Patent Office / Office européen des brevets**

(11) **EP 4 311 123 A1**

(12) # EUROPEAN PATENT APPLICATION
published in accordance with Art. 153(4) EPC

(43) Date of publication:
**24.01.2024 Bulletin 2024/04**

(21) Application number: **21931634.6**

(22) Date of filing: **19.03.2021**

(51) International Patent Classification (IPC):
**H04B 7/145** *(2006.01)*

(52) Cooperative Patent Classification (CPC):
**H04B 7/145**

(86) International application number:
**PCT/JP2021/011531**

(87) International publication number:
**WO 2022/195889 (22.09.2022 Gazette 2022/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NTT DOCOMO, INC.**
**Tokyo 100-6150 (JP)**

(72) Inventors:
• **YOSHIOKA Shohei**
  **Tokyo 100-6150 (JP)**
• **ECHIGO Haruhi**
  **Tokyo 100-6150 (JP)**

• **KUMAGAI Shinya**
  **Tokyo 100-6150 (JP)**
• **TAKAHASHI Yuki**
  **Tokyo 100-6150 (JP)**
• **KURITA Daisuke**
  **Tokyo 100-6150 (JP)**
• **HOKAZONO Yuki**
  **Tokyo 100-6150 (JP)**
• **NAGATA Satoshi**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **RADIO RELAY DEVICE AND RADIO RELAY METHOD**

(57)   The radio relay device controls a relay state when a radio wave from a radio base station or a terminal is relayed without signal interpretation. The radio relay device transmits or receives a signal related to detection or identification to/from the radio base station or the terminal.

FIG. 1

EP 4 311 123 A1

## Description

Technical Field

The present invention relates to a radio relay device and a radio relay method.

Background Art

The 3rd Generation Partnership Project (3GPP) has specified the 5th generation mobile communication system (5G, also referred to as New Radio (NR) or Next Generation (NG)), and is also preparing next-generation specifications called Beyond 5G, 5G Evolution, or 6G.

In a future network such as 6G, higher quality is required as compared with 5G. Examples of such a network include tera bit per second (bps) ultra-high-speed communication, high-reliability and low-delay communication of an optical communication level, and the like.

Thus, the use of a very high frequency band such as a terahertz (THz) wave is conceivable, and high speed by use of an ultra-wide band and low delay by a short symbol length are expected. However, when such a frequency band is used as it is, disadvantages such as narrowness of coverage due to the magnitude of an attenuation rate and low reliability due to high straightness are possible. In addition, it is also necessary to consider a problem of how to secure redundancy and how to increase communication points for places where 6G communication is required.

As described above, in a high frequency band, there is a problem that a radio quiet zone is likely to occur due to strong straightness of radio waves or the like, for example. Currently, a method of improving communication quality under a multipath environment or the like using a passive repeater, an active type reflector (RIS: Reconfigurable Intelligent Surface), or the like has been tried (See Non-Patent Literature 1, pp. 15-16, etc.). Thus, from the perspective of the radio base station and the terminal, it seems that the number of communication points increases.

Citation List

Non Patent Literature

Non Patent Literature 1: NTT DOCOMO, "DOCOMO 6G White Paper version 3.0", [online], published in February 2021, the Internet <URL:https://www.nttdocomo.co.jp/corporate/technology/whitepaper_6g/ >

Summary of Invention

In a case where a radio wave is relayed from a radio wave generation source such as a base station or a terminal (User Equipment, UE) to a radio wave reception destination by reflecting or transmitting the radio wave, it is necessary, by accurately finding the base station, the UE, and the like or causing the base station, the UE, and the like to find them, to accurately detect and identify each other.

Thus, the present invention has been made in view of such a situation, and aims to provide a radio relay device and a radio relay method capable of causing the base station, the UE, and the like to accurately detect or identify each other.

A radio relay device (RIS 300) as an aspect of the present disclosure includes: a control unit (control unit 330) that controls a relay state when a radio wave from a radio base station (radio base station 100, 150) or a terminal (UE 200) is relayed without signal interpretation; and a transmission/reception unit (transmission/reception unit 350) that transmits or receives a signal related to detection or identification to/from the radio base station (radio base station 100, 150) or the terminal (UE 200).

A radio relay method as another aspect of the present disclosure includes: a control step of controlling a relay state when a radio wave from a radio base station (radio base station 100, 150) or a terminal (UE 200) is relayed without signal interpretation; and a transmission/reception step of transmitting or receiving a signal related to detection or identification to/from the radio base station (radio base station 100, 150) or the terminal (UE 200).

Brief Description of Drawings

[Fig. 1] Fig. 1 is an overall schematic configuration diagram of a radio communication system 10.
[Fig. 2] Fig. 2 is a basic configuration diagram of a network using a radio relay device 300.
[Fig. 3] Fig. 3 is a functional block configuration diagram of the radio relay device 300.
[Fig. 4] Fig. 4 is an explanatory diagram of a typical problem in the case of using a high frequency band.
[Fig. 5] Fig. 5 is a diagram illustrating a relationship among transmission antennas (Tx) of a base station 150A and the like, relay antennas (Sx) of a reflection type radio relay device 300, and reception antennas (Rx) of a UE 200 and the like.
[Fig. 6] Fig. 6 is a diagram illustrating a relationship among the transmission antennas (Tx) of the base station 150A and the like, relay antennas (Sx) of a transmission type radio relay device 300, and the reception antennas (Rx) of the UE 200 and the like.

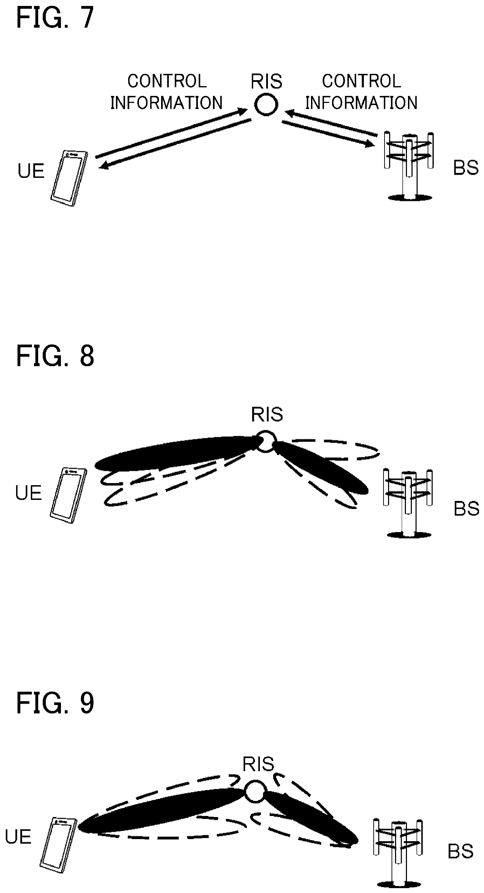

[Fig. 7] Fig. 7 is a diagram illustrating a relationship in which the radio relay device 300 performs signaling of control information with a base station 100 or the UE 200.
[Fig. 8] Fig. 8 is a diagram illustrating an example of selecting beams to be transmitted and received by RIS in a meta structure.

[Fig. 9] Fig. 9 is a diagram illustrating an example of selecting beams to be transmitted and received by RIS in the meta structure.

[Fig. 10] Fig. 10 is a diagram illustrating an operation example of the radio relay device 300 in Case A.

[Fig. 11] Fig. 11 is a diagram illustrating an operation example of the radio relay device 300 in Case B.

[Fig. 12] Fig. 12 is a diagram illustrating an operation example of the radio relay device 300 in Case C.

[Fig. 13] Fig. 13 is a diagram illustrating a relationship between the radio relay device 300 and the base station 100 that transmits and receives signals with the radio relay device 300.

[Fig. 14] Fig. 14 is a diagram illustrating a transmission/reception flow between the radio relay device 300 and the radio base station 100.

[Fig. 15] Fig. 15 is a diagram illustrating a relationship between the radio relay device 300 and the UE 200 that transmits and receives signals with the radio relay device 300.

[Fig. 16] Fig. 16 is a diagram illustrating a transmission/reception flow between the radio relay device 300 and the UE 200.

[Fig. 17] Fig. 17 is a diagram illustrating an example of a hardware configuration of the UE 200, the radio relay device 300, and the like.

Description of Embodiments

Hereinafter, embodiments will be described based on the drawings. Note that, the same functions and configurations are denoted by the same or similar reference numerals, and the description thereof will be omitted as appropriate.

(1) Overall Schematic Configuration of Radio Communication System

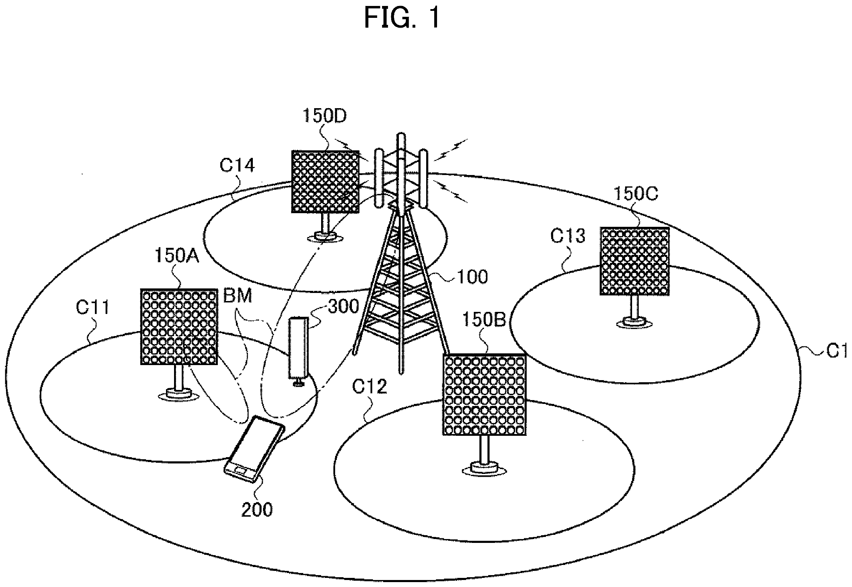

Fig. 1 is an overall schematic configuration diagram illustrating an example of a radio communication system 10 according to the present embodiment. The radio communication system 10 is a radio communication system according to 5G New Radio (NR) or 6G for example, and is constituted of multiple radio base stations and multiple terminals.

Specifically, the radio communication system 10 includes: a radio base station 100; radio base stations 150A to 150D; and a user terminal 200 (hereinafter a User Equipment (UE) 200).

The radio base station 100 is a radio base station according to 5G or 6G for example, and forms a cell C1. Note that, the cell C1 is a cell of a relatively large size and is called a macro cell.

The radio base stations 150A to 150D are also radio base stations according to 5G or 6G, and form cells C11 to C14 of relatively small sizes, respectively. The cells C11 to C14 may be referred to as small cells, semi-macro cells, or the like. As illustrated in Fig. 1, the cells C11 to C14 may be formed to be included (overlaid) in the cell C1 (macro cell).

A macro cell is typically construed as having a communicable area with a radius of several hundred meters to several tens of kilometers covered by one radio base station. In addition, the small cell is construed as a generic term for cells having a small transmission power and covering an area smaller than that of the macro cell.

Note that, the radio base station 100 and the radio base stations 150A to 150D may be referred to as a gNodeB (gNB), a base station (BS), or the like. In addition, the UE 200 may be referred to as an MS or the like. Further, the specific configuration of the radio communication system 10 including the number and types of radio base stations and terminals is not limited to the example illustrated in Fig. 1.

Furthermore, the radio communication system 10 is not necessarily limited to a radio communication system according to 5G or 6G. For example, the radio communication system 10 may be a 6G next-generation radio communication system or a radio communication system according to Long Term Evolution (LTE).

For example, the radio base station 100 and the radio base stations 150A to 150D perform radio communication with the UE 200 according to 5G or 6G. The radio base station 100, the radio base stations 150A to 150D, and the UE 200 can be compatible with massive MIMO that generates a beam BM with higher directivity by controlling radio signals transmitted from multiple antenna elements, carrier aggregation (CA) that uses multiple component carriers (CCs) in a bundle, dual connectivity (DC) that simultaneously communicates between the UE and each of two NG-RAN nodes, Integrated Access and Backhaul (IAB) in which radio backhaul between radio communication nodes such as a gNB and radio access to the UE are integrated, and the like.

In addition, the radio communication system 10 can also be compatible with a high frequency band higher than the following frequency range (FR) defined in 3GPP Release 15.

- FR1: 410 MHz to 7.125 GHz

- FR2: 24.25 GHz to 52.6 GHz

Specifically, the radio communication system 10 supports a frequency band above 52.6 GHz and up to 114.25 GHz. Here, such a high frequency band is referred to as "FR4" for convenience. FR4 belongs to so-called an extremely high frequency (EHF, also called millimeter wave). Note that, FR4 is a provisional name, and may be called another name. Alternatively, the frequency band is not limited to the above frequency band, and the radio communication system may be compatible with any frequency band. For example, FR1 and FR2 may be used.

In addition, the radio communication system 10 includes a radio relay device 300. In the present embodiment, for example, the radio relay device 300 is sometimes described as a reflector (RIS), a phase control reflector, a passive repeater, an Intelligent Reflecting Surface (IRS), or the like. A specific example of the reflector (RIS) may be what is called a metamaterial reflector, a dynamic meta-surface, a meta-surface lens, or the like (see Non Patent Literature 1).

In the present embodiment, the radio relay device 300 relays a radio signal transmitted from the radio base station (for example, the radio base station 150A) (in the description of the present embodiment, at least one of "reflection", "transmission", "aggregation" (that means that radio waves are concentrated at substantially one point), and "diffraction" may be referred to as "relay".) . The UE 200 can receive a radio signal relayed by the radio relay device 300. Conversely, the radio relay device 300 may relay a radio signal transmitted from the UE 200. The same is true of the radio base station 100 (including 150. Hereinafter the same as above). In other words, the radio relay device 300 relays a radio signal from the radio base station 100 or the terminal 200.

For example, the radio relay device 300 can change a phase of a radio signal to be relayed toward the radio base station 100 or the terminal 200. From such a viewpoint, the radio relay device 300 may be referred to as a phase variable reflector. Note that, in the present embodiment, the radio relay device 300 is sometimes described as having a function of changing and relaying a phase of a radio signal, but the present invention is not limited thereto. Further, the radio relay device 300 may be referred to as a repeater, a relay device, a reflect array, an IRS, a transmission array, or the like.

In the present embodiment, the radio relay device 300 such as RIS may be referred to as a battery-less device, a metamaterial function device, an intelligent reflecting surface, a smart repeater, or the like. For example, the radio relay device 300 such as RIS may be defined as having at least one of the following functions.

[UE Function]

- Function of receiving a signal transmitted from BS (e.g., downlink (DL) signal, SS Block (SSB), Physical Downlink Control Channel (PDCCH), Physical Downlink Shared Channel (PDSCH), DeModulation Reference Signal (DM-RS), Phase Tracking Reference Signal (PT-RS), Channel Status Information Reference Signal (CSI-RS), RIS dedicated signal)

Reception of information on the following metamaterial functions

- Function of transmitting signal to BS (e.g., uplink (UL) signal, Random Access Channel Preamble (PRACH), Physical Uplink Control Channel (PUCCH), PUSCH Physical Uplink Control Channel, DM-RS, PT-RS, Sounding Reference Signal (SRS), RIS dedicated signal)

Transmission of information on the following metamaterial functions

- Frame synchronization function with BS

[Metamaterial Function]

- Function of reflecting (e.g. phase change) a signal transmitted from BS or UE

The reflection of a signal may be performed by changing the phase of each of multiple reflective elements included in RIS, or the reflection of a signal may be performed by changing a phase common to the multiple reflective elements.

Function related to beam control (examples: Transmission Configuration Indication (TCI)-state, function related to control of Quasi Co Location (QCL), selection and application of beam, selection and application of spatial filter/precoding weight)

- Function of changing power (e.g., amplifying power) of signal transmitted from a BS or UE

Different power changes may be performed for the respective reflective elements, or alternatively the same power change may be performed for the multiple reflective elements.

In addition, to "receive and transmit" and "relay" in the radio relay device 300 such as RIS may mean that transmission is performed while performing the following predetermined function A but not performing the predetermined function B.

A: a phase shifter is applied, but B: a compensation circuit (example: amplification, filter) is not used.

A: the phase shifter and the compensation circuit are applied, but B: no frequency conversion is performed.

Note that, in the radio relay device 300 such as RIS, the amplitude may be amplified when the phase is changed. Further, the "relay" in the radio relay device 300 such as RIS may mean that a received signal is transmitted as it is without performing layer 2/3 level processing, a signal received at a physical layer level is transmitted as it is, or a received signal is transmitted as it is without signal interpretation (at that time, phase change, amplitude amplification, or the like may be performed).

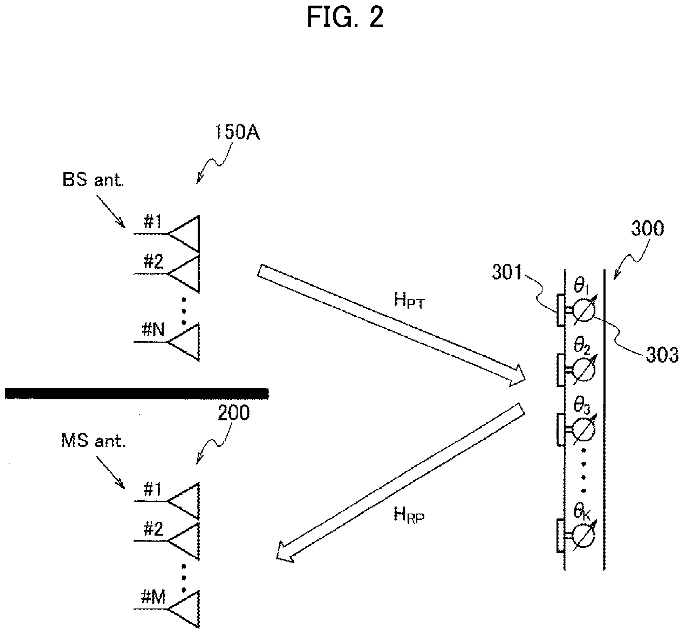

(2) Basic Configuration of Network Using Radio Relay Device 300 Next, a basic configuration of a network using the radio relay device 300 will be described. Fig. 2 is a basic configuration diagram of the network using the radio relay device 300.

As illustrated in Fig. 2, for example, the radio relay device 300 intervenes between the radio base station 150A (or may be another radio base station such as the radio base station 100) and the UE 200, and relays (e.g. reflection, transmission, aggregation, and diffraction) a radio signal transmitted and received between the radio base station 150A and the UE 200.

As a specific example, when the radio quality is good, the radio base station 150A and the UE 200 directly transmit and receive radio signals not via the radio relay device 300. When the radio quality deteriorates (e.g. when there is a shielding object between the radio base station 150A and the UE 200), the radio relay device 300 relays radio signals transmitted and received between the radio base station 150A and the UE 200.

Specifically, the radio relay device 300 presumes propagation path information $H_{PT}$ and $H_{RP}$ between a radio wave generation source such as the radio base station 150A and the UE 200 and the relay antenna based on a change in reception power at the time of control of a variable unit 303 such as a variable phase shifter, and controls the variable unit 303 such as the variable phase shifter based on the presumed propagation path information to relay a radio signal toward a radio wave reception destination such as the UE 200. Note that, the radio relay device 300 is not limited to presuming the propagation path information $H_{PT}$ and $H_{RP}$, and may relay a radio signal toward the radio wave reception destination such as the UE 200 by controlling the variable unit 303 such as the variable phase shifter based on control information received from the radio base station 150A or the UE 200.

Here, the propagation path or propagation channel is an individual communication path in radio communication, and here, is a communication path between transmission/reception antennas (BS ant., MS ant., and the like in the drawing).

For example, the radio relay device 300 includes a small multielement antenna 301 compatible with massive MIMO and a variable phase shifter or phase shifter 303 that changes the phase of a radio signal, substantially a radio wave, to a specific phase, and controls the phase of a radio wave relayed to the UE 200 or the radio base station 150A using the phase shifter 303. For a specific phase control method, reference may be made to the following literature.

Venkat Arun and Hari Balakrishnan, "RFocus: Beamforming Using Thousands of Passive Antennas", 17th USENIX Symposium on Networked Systems Design and Implementation (NSDI '20), February 25-27, 2020, Santa Clara, CA, USA, pp.1047-1061

Qingqing Wu, and Rui Zhang, "Intelligent Reflecting Surface Enhanced Wireless Network via Joint Active and Passive Beamforming", IEEE TRANSACTIONS ON WIRELESS COMMUNICATIONS, VOL. 18, NO. 11, NOVEMBER 2019, pp.5394-5409

(3) Functional Block Configuration of Radio Relay Device 300

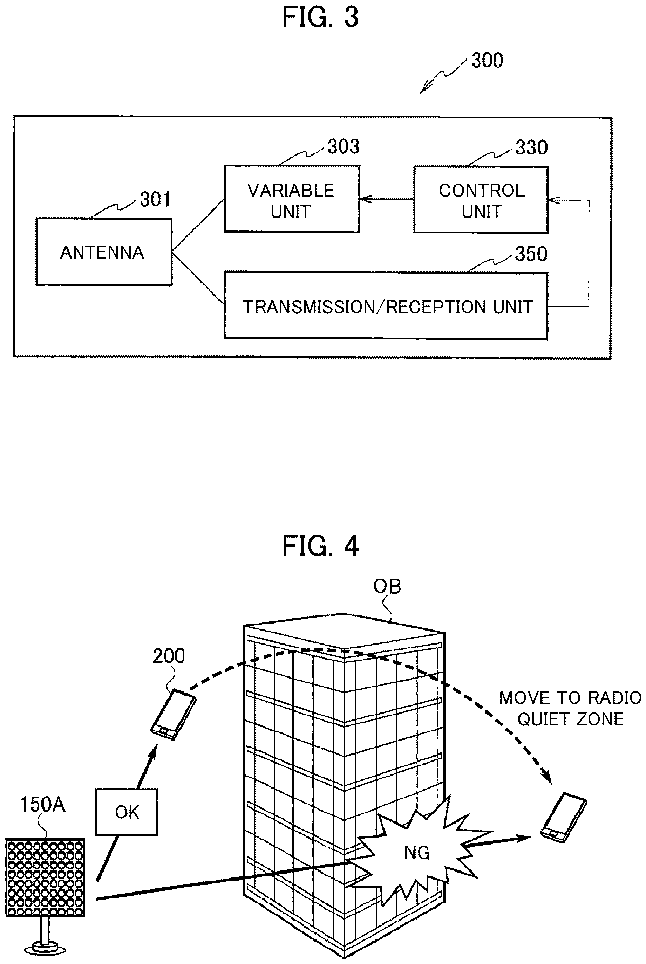

Fig. 3 is a functional block configuration diagram of the radio relay device 300. As illustrated in Fig. 3, the radio relay device 300 includes: the antenna 301; the variable unit 303; a control unit 330; and a transmission/reception unit 350.

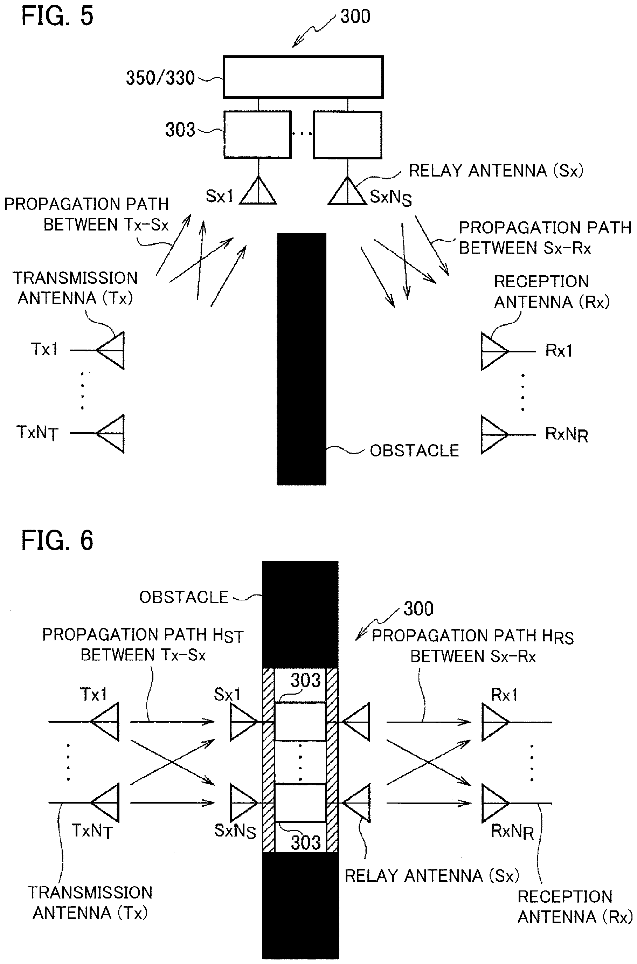

The antenna 301 is at least one antenna connected to the variable unit 303 as described later with reference to the drawings such as Figs. 5 and 6. For example, the antenna 301 may be arranged as an array antenna. In the present embodiment, the antenna 301 is sometimes particularly referred to as a relay antenna.

The variable unit 303 is connected to the antenna 301, and can change a phase, a load, power, amplitude, and the like. For example, the variable unit 303 may be a variable phase shifter, a phase shifter, an amplifier, or the like. For example, by changing the phase of a radio wave having reached the relay antenna from the radio wave generation source, the direction, beam, and the like of the radio wave can be changed.

The control unit 330 is a control means that controls the variable unit 303. In the present embodiment, the control unit 330 functions as a control unit that controls a relay state when a radio wave from the radio base station 100 or the terminal 200 is relayed without signal interpretation. Here, the control unit 330 may change the relay state based on control information received from the radio base station 100 or the terminal 200, or may change the relay state based on the radio wave reception state from the radio base station 100 or the terminal 200. For example, the control unit 330 may select (the direction of) an appropriate reception beam and transmission beam based on control information such as SSB and control the variable unit 303 for this purpose. Similarly, the control unit 330 may select an appropriate combination of the reception direction and the transmission direction from the reception state on the basis of, for example, the largest reception quality or reception power, and control the variable unit 303 for this purpose.

In addition, in the present embodiment, the control unit 330 can control the variable unit 303 based on, for example, information on a propagation path between the UE 200 or the radio base station 150A and the relay antenna 301 (including information presumed based on the reception state, and control information. Hereinafter the same as above). For example, the control unit 330 can relay a radio wave, which is received from the radio base station 150A, in a specific direction such as toward the radio wave reception destination (the UE 200 in this case) by changing the phase without using transmission power and using a known method such as an active repeater or RIS. Specifically, the control unit 330 controls the phase of the radio signal based on the presumed $H_{PT}$ and $H_{RP}$ to relay it toward the UE 200 or the radio base station 150A. In other words, a radio wave can be relayed in the specific direction by changing the phase of an array antenna or the like based on the same principle as beamforming or the like. Note that, the radio relay device 300 may control (change) only the phase of a radio signal (radio wave) by the control unit 330, and relay the radio signal without power supply and without amplification of the power of the relayed radio signal or the like.

Meanwhile, the transmission/reception unit 350 is a transmission/reception means that transmits and receives radio waves, signals, and various types of information. In the present embodiment, the transmission/reception unit 350 functions as a transmission/reception unit that transmits or receives a signal related to detection or identification to/from the radio base station 100 (including 150. Hereinafter the same as above) or the terminal 200. Specifically, the transmission/reception unit 350 may receive a signal for finding the radio base station 100 or the terminal 200. Alternatively, the transmission/reception unit 350 may transmit a signal for letting the radio base station 100 or the terminal 200 find the radio relay device 300. For example, the various signals described above may be used in the UE function and the metamaterial function. Note that, a specific signal transmission/reception example (signaling example or the like) will be described later.

Further, the transmission/reception unit 350 may function as a reception unit that acquires information based on the reception state or a reception unit that acquires control information from the radio base station 150A or the UE 200. For example, the transmission/reception unit 350 may receive, as the control information, various signals (including various signals exemplified in the UE function and the metamaterial function described above) such as SSB transmitted from the radio base station 150A or the UE 200. Further, the transmission/reception unit 350 may presume propagation path information ($H_{PT}$, $H_{RP}$) between the radio wave generation source (e.g., radio base station 150A, UE 200) and the relay antenna 301 based on the reception state (e.g., change in reception power) at the time of control of the variable unit 303.

Note that, $H_{PT}$ and $H_{RP}$ can be expressed as follows.

[Mathematical Formula 1]

$$H_{PT} \in \mathbb{C}^{K \times N}$$
$$H_{RP} \in \mathbb{C}^{M \times K}$$

M indicates the number of antennas of the terminal (reception), N indicates the number of antennas of the radio base station (transmission), and K indicates the number of relay antennas.

Specifically, the propagation path information (propagation channel information) regarding each propagation path is information such as amplitude and phase and, in the present embodiment, is information presumed regarding the propagation path of the radio wave arriving at the relay antenna 301. For example, the transmission/reception unit 350 may presume the propagation path information of the relay antenna 301 based on a change in reception power when the phase of the variable unit 303 of each of the arrayed relay antennas 301 is switched to orthogonal phase using the same principle as the in-phase/quadrature (I/Q) detection.

(4) Configuration Example of Antenna etc.

Next, a configuration example focusing on the relay antenna 301 will be described. First, a typical problem in the case of using a high frequency band will be described, and an antenna configuration example and the like in the radio relay device 300 that can solve this problem will be described.

(4.1) Problem

A radio base station compatible with Massive MIMO is capable of transmitting a beam. Massive MIMO generally means MIMO communication using an antenna having 100 or more antenna elements, and enables radio communication at higher speed by a multiplexing effect of multiple streams and the like. In addition, advanced beamforming (BF) also becomes possible. The beam width may be dynamically changed according to a frequency band to be used, the state of the UE 200, and the like. In addition, it is possible to increase reception signal power due to a beamforming (BF) gain by using a narrow beam. Further, effects such as reduction of interference and effective use of radio resources are expected.

Fig. 4 is an explanatory diagram of a typical problem in the case of using a high frequency band. As illustrated in Fig. 4, in a case where a high-frequency band of several GHz to several tens of GHz or more is used, for example, a radio quiet zone is likely to occur due to strong straightness of radio waves. When a line of sight between the radio base station 150A and the UE 200 is clear, radio communication between the radio base station 150A and the UE 200 is not affected even when the high frequency band is used. On the other hand, when a line of sight between the radio base station 150A and the UE 200 is blocked by an obstacle OB such as a building or a tree, for example, the radio quality deteriorates significantly. In other words, when the UE 200 moves to the radio quiet zone blocked by the obstacle OB, communication may be interrupted.

In consideration of the presence of an application (such as remote control) utilizing the high-speed, large-capacity, and low-delay characteristics of 5G or 6G, it is important to eliminate the radio quiet zone and continue connection between the radio base station and the terminal without interruption of communication in the radio communication system 10.

Thus, a technique making it possible to relay a radio wave between the base station 150A and the UE 200, e.g. a radio wave propagation control device such as an active repeater or a RIS, has been developed. In this way, by controlling the propagation characteristics of a base station signal, the communication characteristics can be improved, and coverage expansion and communication redundancy can be ensured without a signal source, and installation and operation costs caused by an increase in the number of base stations can be reduced.

The RIS (reflector) can relay (e.g., reflect) radio waves or signals such as beams coming from the base station or the terminal in a predetermined direction and deliver the radio waves or signals to the terminal or the base station. Conventional radio relay devices include a passive type device and an active type device. The passive type device has an advantage that control information is unnecessary, but is incapable of fine beam control and is incapable of following a mobile object, an environmental change, and the like. On the other hand, the active type device changes control of the reflection angle, the beam width, and the like according to the position of a mobile station. The active type device has a disadvantage that control information is necessary and an overhead increases, but is capable of fine beam control by, for example, changing a load (phase) state of a control antenna, and is capable of variably controlling the propagation characteristics of a radio wave, and is capable of following a mobile object, an environmental change, and the like.

There are two types of active type radio relay devices (such as radio wave propagation control devices) and control methods: a feedback (FB) standard and a propagation path information standard. In the FB standard, a variable radio wave propagation control device causes the UE or the like to feed back a communication state when a load (phase) state is randomly changed, and searches for an optimum condition. On the other hand, in the propagation path information standard, the load state is determined based on propagation path information between the radio base station and the radio wave propagation control device, which enables optimum radio wave propagation control. In the present embodiment, any of the above types is applicable.

In addition, examples of the relay method include reflection, transmission, diffraction, aggregation, and the like, and in the present embodiment, configuration examples of a reflection type and a transmission type will be described below for example, but the method is not limited thereto (see Non Patent Literature 1 and the like for a diffraction type and an aggregation type).

(4.2) Reflection Type

An example of a system configuration of the reflection type radio relay device 300 will be described with reference to Fig. 5. Fig. 5 is a diagram illustrating a relationship among transmission antennas (Tx) of the base station 150A and the like, relay antennas (Sx) of the transmission type radio relay device 300, and reception antennas (Rx) of the UE 200 and the like. As illustrated in Fig. 5, the present embodiment employs MIMO as an example, in which multiple propagation paths between Tx and Sx and multiple propagation paths between Sx and Rx exist and the radio relay device 300 controls the variable unit 303 such as a variable phase shifter of the antenna 301 to relay radio waves.

As illustrated in Fig. 5, in the case of the reflection type, the arrayed relay antennas 301 are arranged to be oriented in the same direction. Thus, the propagation path of the relay antennas 301 can be presumed based on the reception state observed when the phase condition of the relay antennas 301 is changed in various ways.

(4.3) Transmission Type

An example of a system configuration of the transmission type radio relay device 300 will be described with reference to Fig. 6. Fig. 6 is a diagram illustrating a relationship among the transmission antennas (Tx) of the base station 150A and the like, the relay antennas (Sx) of the transmission type radio relay device 300, and the reception antennas (Rx) of the UE 200 and the like. As illustrated in Fig. 6, the present embodiment employs MIMO as an example, in which multiple propagation paths between Tx and Sx and multiple propagation paths between Sx and Rx exist, and the radio relay device 300 relays a radio wave arriving from one side to the other side via the variable unit 303 such as a variable phase shifter of the relay antenna 301 as illustrated in the drawing. In this way, in the case of the transmission type, a reference antenna 301A and the relay antenna 301 are arranged to be directed in opposite directions as a pair so that a radio wave arriving from one side can be relayed to the other side. In either the transmission type or the reflection type, the reception state may be measured by a power detector or the like configured to be able to detect power having reached the relay antenna 301. Further, the propagation path of the relay antenna 301 can be presumed based on a reception signal observed when the phase condition of the relay antenna 301 is changed in various ways.

(5) Operation Example of RIS

Next, an operation example of the radio relay device 300 such as RIS will be described for the following three cases.

Case A: Control information is communicated between the base station and the RIS, and the operation of the RIS is determined based on the control information.

Case B: The control information is communicated between the mobile station and the RIS, and the operation of the RIS is determined based on the control information.

Case C: The RIS autonomously determines the operation without exchanging the control information with the base station and the mobile station.

In the case of each of the Cases, at least one of the following operations may be performed. Note that, in the present embodiment, finding will be particularly described in detail.

Finding
Synchronization/Connection with Base Station
Synchronization/Connection with Mobile Station
Synchronization/Connection between Base Station and Mobile Station
Beam Selection based on Information from Base Station
Beam Selection based on Information from Mobile Station
Feedback Specification associated with Meta Structure Control
Signaling Mechanism for performing RIS Beam Control
Beam Selection by RIS
Beam Switching in case where Multiple Mobile Stations Exist
Cooperation by Multiple RISs
Communication Quality Report to Base Station/Mobile Station

(5.1) Case A

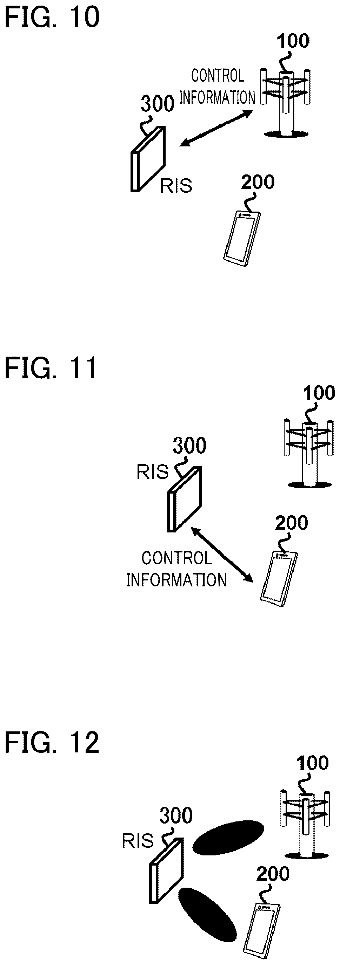

Fig. 10 is a diagram illustrating an operation example of the radio relay device 300 in Case A. As illustrated in Fig. 10, in Case A, the radio relay device 300 such as RIS controls the relay state based on the control information received from the base station 100. Note that, the radio relay device 300 may perform the following operation as an initial connection procedure with the radio base station 100.

- Finding

  The RIS may find a synchronous/connectable base station.
  The RIS may be found by a synchronous/connectable base station.

- Synchronization/Connection: The RIS performs an operation related to synchronization/connection with the base station

For example, the RIS performs synchronization based on SSB transmitted from the base station, and transmits a connection request to the base station

- Initial Connection between Base Station and Mobile Station: Receive and transmit a signal related to initial connection transmitted from the base station and the mobile station (beam control in the RIS)

For example, the RIS directs a beam according to each SSB index

In addition, the radio relay device 300 may perform the following operation when performing beam control (beam control based on control information from the base station) in communication after establishment of connection between the base station and the mobile station. Note that, the beam control may be performed in a UE-specific manner.

- The RIS receives and decodes control information from the base station

For example, in order to perform beam control, the RIS may receive and decode CSI information or position information of the mobile station or the base station from the base station.

- The RIS performs beam control based on control information received from the base station and decoded.

For example, beam switching in a case where multiple mobile stations exist

- The RIS reports information on communication to the base station

For example, the RIS reports the communication quality on the RIS side to the base station

(5.2) Case B

Fig. 11 is a diagram illustrating an operation example of the radio relay device 300 in Case B. As illustrated in Fig. 11, in Case B, the radio relay device 300 such as RIS controls the relay state based on the control information received from the UE 200. Note that, the radio relay device 300 may perform the following operation as an initial connection procedure with the UE 200.

- Finding

The RIS may find a synchronous/connectable mobile station.

The mobile station may find a synchronous/connectable RIS.

- Synchronization/Connection: At least one of the RIS and the mobile station performs an operation related to synchronization/connection.

For example, the RIS performs synchronization based on S-SSB transmitted from the mobile station, and transmits a connection request to the mobile station

- Initial Connection between Base Station and Mobile Station: Receive and transmit a signal related to initial connection transmitted from the base station and the mobile station (beam control in the RIS)

For example, the RIS directs a beam according to each SSB index

In addition, the radio relay device 300 may perform the following operation when performing beam control (beam control based on control information from the mobile station) in communication after establishment of connection between the base station and the mobile station. Note that, the beam control may be performed in a UE-specific manner.

- The RIS receives and decodes control information from the mobile station

For example, in order to perform beam control, the RIS may receive and decode CSI information or position information of the mobile station or the base station from the mobile station.

- The RIS performs beam control based on control information received from the mobile station and decoded

For example, beam switching in a case where multiple mobile stations exist

- The RIS reports information on communication to the mobile station

For example, the RIS reports the communication quality on the RIS side to the mobile station

(5.3) Case C

Fig. 12 is a diagram illustrating an operation example of the radio relay device 300 in Case C. As illustrated in Fig. 12, in Case C, the radio relay device 300 such as RIS autonomously controls the relay state based on the reception state. Note that, the radio relay device 300 may perform the following operation as an initial connection procedure with the radio base station 100 or the UE 200.

- Finding: The RIS may find a synchronous base station and/or mobile station.
- Synchronization: The RIS performs an operation related to synchronization with the base station and/or the mobile station.

For example, the RIS performs synchronization based on SSB transmitted from the base station.

- Initial Connection between Base Station and Mobile Station: Receive and transmit a signal related to initial connection transmitted from the base station and the mobile station (beam control in the RIS)

For example, the RIS directs a beam according to each SSB index

In addition, the radio relay device 300 may perform the following operation when performing beam control (beam control autonomously performed by the RIS) in communication after establishment of connection between the base station and the mobile station. Note that, the beam control may be performed in a UE-specific manner.

- The RIS performs beam control based on information related to signals received and transmitted from the base station and the mobile station.

In other words, it may be configured so that the beam control is performed without receiving and decoding control information. For example, the RIS performs beam control based on the quality of a signal received by the RIS.

(6) Transmission and reception of signals related to detection or identification

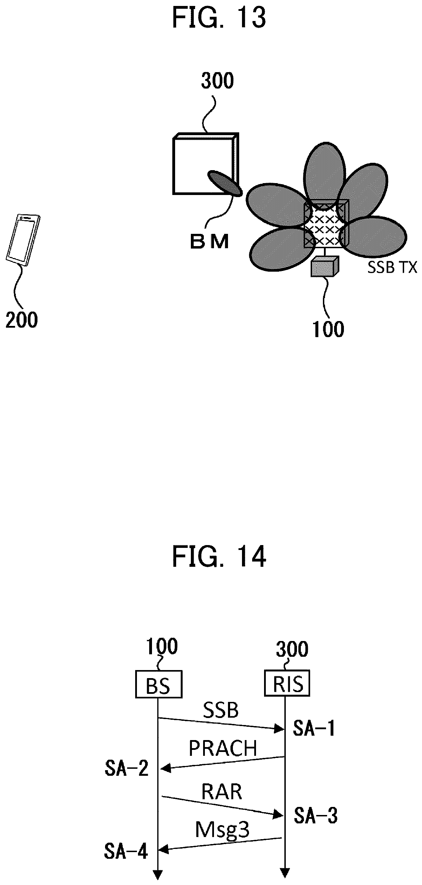

An example of an operation in which the radio relay device 300 transmits or receives a signal related to detection or identification to or from the radio base station 100 or the terminal 200 will be described below with reference to Figs. 13 to 16. Note that, although described as "detection" and "identification" below, the present invention may be applied to "synchronization" between the radio relay device 300 and the radio base station 100 or the terminal 200.

Note that, the operation example described below is an example, and the present embodiment includes a case where the RIS (an example of the radio relay device 300) performs only reception, a case where the RIS performs only transmission, and a case where the RIS performs reception and transmission. In addition, the present embodiment includes a case where the RIS detects/identifies the base station or the terminal, a case where the base station or the terminal detects/identifies the RIS, and a case where both the RIS and the base station or the terminal detect/identify each other. According to the present embodiment including the following example, the BS/UE can recognize the presence of the RIS and recognize the RIS as one of the communication path candidates between the base station and the terminal. In addition, the RIS can recognize existence of the BS/UE and know a target to receive a function (that is, a signal) as the RIS and to perform transmission (relay such as reflection). Note that, in the following description, the radio relay device will be described as the RIS, but the present invention is not limited thereto, and it goes without saying that the present invention is applicable to other radio relay devices.

(6.1) Signal transmission/reception example between base station and RIS

An example of signal transmission and reception between the radio base station and the RIS will be described. Fig. 13 is a diagram illustrating a relationship between the radio relay device 300 and the base station 100 that transmits and receives signals with the radio relay device 300. Fig. 14 is a diagram illustrating a transmission/reception flow between the radio relay device 300 and the radio base station 100. Note that, not all the flows in Fig. 14 are intended to be performed, and only some of the flows may be performed.

(6.1.1) Finding of BS by RIS

As illustrated in Fig. 14, the base station 100 transmits a signal such as SSB, and the RIS 300 receives this signal (step SA-1). Here, the following options may be employed.

   1-1: The RIS may detect/identify the base station based on a signal transmitted from the base station.
   1-1a: The signal may be a synchronization signal (e.g., SSB) and/or system information (e.g., SIB).

The sequence/resource/parameter/information of a synchronization signal (e.g., SSB) and/or system information (e.g., SIB) may be the same as or different from that of a signal that the terminal receives to connect to the base station.
SIB for the RIS may be defined.
The sequence/resource/parameter may be defined or preset in the RIS.
1-1b: The signal may be a signal defined for the RIS.
The sequence/resource/parameter may be defined or preset in the

RIS.

1-1c: PLMN information may be received along with detection/identification of the base station.
It may be determined that the base station is successfully detected/identified only when the received PLMN information is predetermined information.
The predetermined information may be preset in the RIS.
1-1d: It may be determined that the base station is successfully detected/identified when the received power of the received signal exceeds a predetermined value.
The predetermined value may be preset in the RIS or may be included in the signal received from the base station.
1-1e: It may be determined that the base station according to a signal whose received power of the received signal is larger is successfully detected/identified when multiple signals are received.
The multiple signals may be multiple signals (e.g., SSB) transmitted by the same base station, or may be signals transmitted by different base stations.
1-1e': It may be determined that the base station according to a signal whose received power exceeds a predetermined value is successfully detected/identified when multiple signals are received.
It may be determined that the base station according to each of the multiple signals is successfully detected/identified when the received power of the multiple signals exceeds the predetermined value.
1-f: It may be determined that the base station is successfully detected/identified when the signal received from the base station includes information related to RIS detection (e.g., information for expecting/permitting a response from the RIS). The operation described below is applied only in this case, and if the information is not included, the subsequent operation does not necessarily have to be applied.
1-2: After detecting/identifying a base station, the RIS does not necessarily have to make a predetermined response to the base station.
Example: Case in which only base station detection by the RIS is performed and RIS detection by the base station is not performed
1-2a: RACH transmission (PRACH transmission) to the received SSB does not necessarily have to be performed.

(6.1.2.) Finding of BS by RIS/Finding of RIS by BS

As illustrated in Fig. 14, the RIS 300 that has received the signal from the base station 100 transmits a signal to the base station 100 (step SA-2). Here, the following options may be employed.
1-3: The RIS may transmit the base station a signal corresponding to the signal received from the base station.

Example: The signal may be a synchronization signal (e.g., SSB) and/or a signal (e.g., PRACH) corresponding to system information (e.g., SIB).

The resource of the signal transmitted by the RIS may be determined based on signal reception.

When PRACH is transmitted after receipt of SSB, the sequence/resource/parameter of the PRACH may be the same as or different from that of a signal that the terminal transmits to connect to the base station.

Example: Through the signal transmission, the presence and location of the RIS may be determined by the base station.

The signal transmission by the RIS may be necessarily performed at a predetermined cycle.

1-4: After transmission according to 1-3, the RIS 300 may receive a corresponding signal from the base station (step SA-3).

The signal may be a random access response (RAR).

It may be determined that the detection/identification of the base station is completed by this signal reception instead of the signal reception of 1-1.

When the reception of the corresponding signal is not successful by the lapse of a predetermined period after the transmission according to 1-3 (e.g., RAR window), 1-3 may be performed again.

The sequence/resource/parameter of the signal transmitted again in 1-3 may be the same as or different from that of the previous time (e.g., power ramping).

1-5: The RIS may perform an initial access operation based on SSB transmitted from the base station.

PRACH may be transmitted based on the SSB reception, and a corresponding signal (e.g., Msg3) may be transmitted after RAR is received from the base station.

The sequence/resource/parameter of the PRACH/Msg3 may be the same as or different from that of a signal that the terminal transmits to connect to the base station.

It may be determined that the detection/identification of the RIS is successful through the transmission of the Msg3.

1-6: The RIS may transmit a predetermined signal independently of a signal transmitted from the base station.

The signal may be transmitted based on a GNSS signal.

The sequence/resource/parameter of the signal may be defined or preset in the RIS.

The signal transmission by the RIS may be necessarily performed at a predetermined cycle.

Note that, the above may be applied by replacing the base station with the RIS.

(6.2) Signal transmission/reception example between terminal and RIS

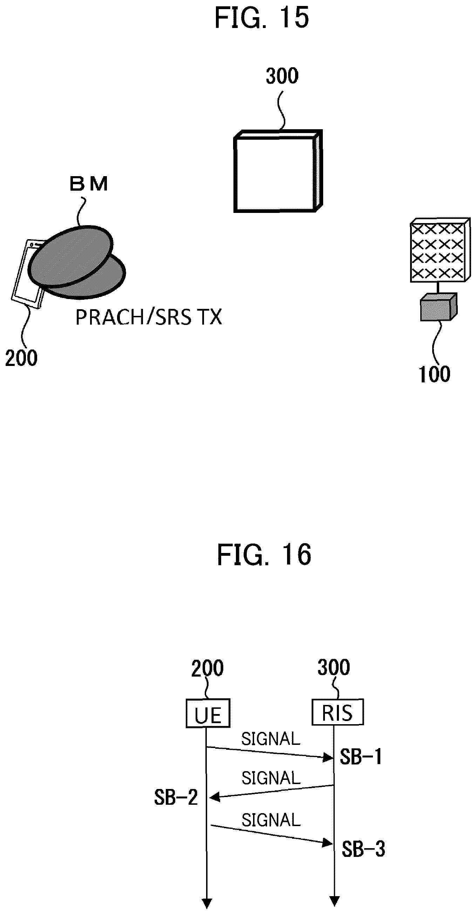

An example of signal transmission and reception between the terminal and the RIS will be described. Fig. 15 is a diagram illustrating a relationship between the radio relay device 300 and the UE 200 that transmits and receives signals with the radio relay device 300. Fig. 16 is a diagram illustrating a transmission/reception flow between the radio relay device 300 and the UE 200. Note that, not all the flows in Fig. 16 are intended to be performed, and only some of the flows may be performed. Note that, as an application condition, the following 2-0 and subsequent contents may be applied only in any of the following cases.

The contents may only be applied after the RIS detects/identifies the base station.

The contents may only be applied after the RIS is detected/identified by the base station (e.g., after a predetermined signal is transmitted).

The contents may only be applied after the RIS and the base station are synchronized/connected with/to each other.

The contents may only be applied after the RIS receives and transmits a predetermined signal (e.g., SSB) transmitted from the base station.

The contents may only be applied after the UE is connected to the base station.

(6.2.1) Finding of BS by RIS

As illustrated in Fig. 16, the UE 200 transmits a signal, and the RIS 300 receives this signal (step SB-1). Here, the following options may be employed.

2-1: The RIS may detect/identify the UE based on the signal transmitted from the UE.

2-1a: The signal may be PRACH.

The sequence/resource/parameter of the signal may be the same as or different from that of a signal that the terminal transmits to connect to the base station.

2-1b: The signal may be SRS.

A usage related to the RIS may be defined, and the usage may be associated with the SRS.

2-1c: The signal may be a synchronization signal (e.g., S-SSB).

2-1d: The signal may be a signal defined for the RIS.

2-1e: The UE may perform the transmission based on the received signal.

Example: The PRACH may be transmitted based on the received SSB.

Example: The signal may be a signal received from the RIS.

2-1f: The sequence/resource/parameter of the signal may be defined, preset, set/specified in the base station, or determined based on the received signal.

The signal may be set/specified by any of signaling related to SSB, SIB, and RRC connection, MAC CE, and DCI (e.g., group common PDCCH) .

2-1g: The signal may include information related to identification of NW/UE.

The information may be identification information of the UE: example: C-RNTI, UE-ID

The information may be information related to the PLMN/base station to be connected.

It may be determined that the UE is successfully detected/identified only when the received information related to the identification of the NW/UE is predetermined information.

The predetermined information may be preset in the RIS, or may be set by the base station, or may be associated with the base station that is detected/identified/synchronized/connected.

2-1h: It may be determined that the UE is successfully detected/identified when the received power of the received signal exceeds a predetermined value.

The predetermined value may be preset in the RIS, may be set by the base station, or may be included in the signal received from the UE.

2-1i: After detecting/identifying the UE, the RIS may transmit information related to the UE to a predetermined base station.

The information may be identification information of the UE: example: C-RNTI, UE-ID

The information may be information related to the location/direction/beam (QCL/TCI-state)/precoder/detection resource of the UE.

The predetermined base station may be a base station detected by/identified by/synchronized with/connected to the RIS.

2-2: After detecting/identifying a UE, the RIS does not necessarily have to make a predetermined response to the UE.

Example: Case in which only UE detection by the RIS is performed and RIS detection by the UE is not performed

2-2a: A response to the received PRACH/SRS/S-SSB does not necessarily have to be performed.

(6.2.2) Finding of UE by RIS

2-3: The RIS may transmit the UE a signal corresponding to the signal received from the UE (step SB-2).

The resource of the signal transmitted by the RIS may be determined based on signal reception.

When the reception of the corresponding signal is not successful by the lapse of a predetermined period after the transmission according to 2-1 (e.g., RAR window), the UE may perform 2-1 again.

The sequence/resource/parameter of the signal transmitted again in 2-1 may be the same as or different from that of the previous time (e.g., power ramping).

2-4: After transmission according to 2-3, a corresponding signal may be received from the UE (step SB-3).

It may be determined that the detection/identification of the UE is completed by this signal reception instead of the signal reception of 2-1.

(6.2.3) Finding of RIS by UE

In 2-1 to 2-4 described above, the RIS and the UE may be applied by replacing them with each other.

(6.3) Signal related to UE

The RIS may receive information related to the UE from the base station.

The information may be information on PLMN to which the UE is connected or information related to a frequency (e.g.: band, carrier, serving cell) to be used.

The information may be identification information of the UE: example: C-RNTI, UE-ID

The information may be information related to the location/direction/beam (QCL/TCI-state)/precoder of the UE.

(6.4) Signal related to RIS

The UE may receive information related to the RIS from the base station. In the above (6.3), the RIS and the UE may be applied by replacing them with each other.

(7) Action and effect

According to the above-described embodiment, the following effects can be obtained. That is, the radio relay device (RIS 300) includes: a control unit (control unit 330) that controls a relay state when a radio wave from a radio base station (radio base station 100, 150) or a terminal (UE 200) is relayed without signal interpretation; and a transmission/reception unit (transmission/reception unit 350) that transmits or receives a signal related to detection or identification to/from the radio base station (radio base station 100, 150) or the terminal (UE 200).

Thus, the radio relay device 300 can accurately find the base station 100, the UE 200, and the like with each other, by transmitting and receiving a signal for detecting or identifying the base station 100, the UE 200, and the like with each other, so that the radio relay device 300 can accurately perform relay using a reflector (RIS) and the like.

Meanwhile, in the present embodiment, the transmission/reception unit 350 of the radio relay device 300 receives the signal for finding the radio base station 100 or the terminal 200, or transmits the signal for finding the radio relay device.

This makes it possible to lead to an accurate relay operation using a signal capable of accurately finding them.

Meanwhile, in the present embodiment, the transmission/reception unit 350 of the radio relay device 200 receives information related to the terminal from the radio base station.

Thus, the radio relay device 300 can indirectly receive a signal for detection, identification, and the like of the terminal 200 via the radio base station 100, and can relay a radio signal with the terminal appropriately using a reflector (RIS) or the like.

Meanwhile, in the present embodiment, the radio relay device 300 assumes that the terminal 200 receives information related to the radio relay device from the radio base station 100.

Thus, the terminal 200 can indirectly receive a signal for detection, identification, and the like of the radio relay device 200 via the radio base station 100.

Meanwhile, in the present embodiment, the control unit 330 of the radio relay device 300 controls at least one of reflection, transmission, aggregation, diffraction, and signal power change of a radio wave from the radio base station or the terminal, and a reception or transmission beam.

Thus, the radio relay device 300 can switch to an appropriate relay state according to the control information and the reception state.

Meanwhile, in the present embodiment, the control unit 330 of the radio relay device 300 performs at least one of finding, synchronization, and connection of the radio base station or the terminal, initial connection between the radio base station and the terminal, communication after connection establishment, and beam control.

Thus, the radio relay device 300 can perform various operations related to communication in addition to simply reflecting radio waves and the like.

(9) Other Embodiments

Although the contents of the present invention have been described above with reference to the examples, the present invention is not limited thereto, and it is obvious to those skilled in the art that various modifications and improvements can be made.

For example, in the above-described embodiment, the communication target of the radio relay device is described as a "base station" or a "terminal", but the present invention is not limited thereto, and the target may be a communication device. Further, in the above-described embodiment, the direction from the radio base station to the terminal (downlink direction) has been mainly described. However, as described in the above-described embodiment as appropriate, a radio signal from the terminal to the radio base station (uplink direction) may also be controlled.

The block diagram (Fig. 3) used in the description of the above-described embodiment shows blocks in units of functions. Those functional blocks (components) can be realized by a desired combination of at least one of hardware and software. A realization method for each functional block is not particularly limited. That is, each functional block may be realized by using one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that makes a transmitting function work is called a transmitting unit or a transmitter. For any of the above, as described above, the realization method is not particularly limited.

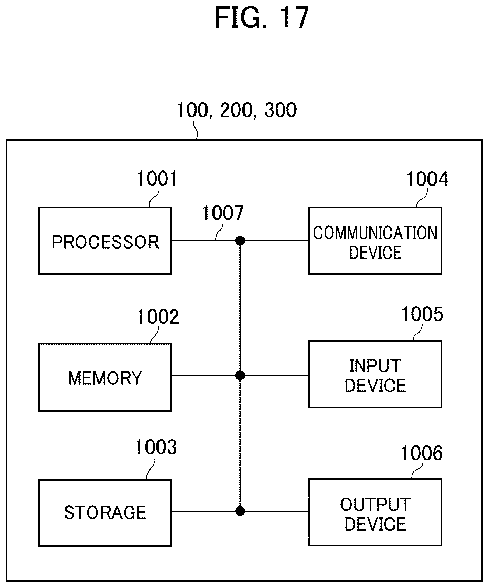

Further, the above-described the UE 200 and the radio relay device 300 may function as a computer that performs processing of a radio communication method of the present disclosure. FIG. 17 is a diagram showing an example of a hardware configuration of the base station 100, the UE 200 and the radio relay device 300. As shown in FIG. 17, the base station 100, the UE 200 and the radio relay device 300 may be configured as a computer device including a processor 1001, a memory 1002, a storage 1003, a communication device 1004, an input device 1005, an output device 1006, a bus 1007, and the like.

Furthermore, in the following description, the term "device" can be substituted with circuit, device, unit, or the like. The hardware configuration of the device may include one or more devices shown in the figure or may not include some of the devices.

Each of the functional blocks of the radio relay device 300 (see Fig. 3) is implemented by means of any of hardware elements of the computer device or a combination of the hardware elements.

In addition, each function or a part of function in the radio relay device 300 may be realized by loading predetermined software (programs) on hardware such as the processor 1001 and the memory 1002 so that the processor 1001 performs arithmetic operations to control communication via the communication device 1004 and to control at least one of reading and writing of data on the memory 1002 and the storage 1003.

The processor 1001 operates, for example, an operating system to control the entire computer. The processor 1001 may be configured with a Central Processing Unit (CPU) including interfaces with peripheral devices, control devices, arithmetic devices, registers, and the like.

Moreover, the processor 1001 reads a program (program code), a software module, data, and the like from at least one of the storage 1003 and the communication device 1004 into the memory 1002, and executes various processes according to these. As the program, a program causing the computer to execute at least part of the operation described in the above embodiment is used. Alternatively, various processes described above can be executed by one processor 1001 or can be executed simultaneously or sequentially by two or more processors 1001. The processor 1001 can be implemented by using one or more chips. Alternatively, the program may be transmitted from a network via a telecommunication line.

The memory 1002 is a computer readable recording medium and may be configured, for example, with at least one of a Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage device), and the like. The memory 1002 may store therein programs (program codes), software modules, and the like that can execute the method according to one embodiment of the present disclosure.

The storage 1003 is a computer readable recording medium. Examples of the storage 1003 include at least one of an optical disk such as Compact Disc ROM (CD-ROM), a hard disk drive, a flexible disk, a magneto-optical disk (for example, a compact disk, a digital versatile disk, Blu-ray (registered trademark) disk), a smart card, a flash memory (for example, a card, a stick, a key drive), a floppy (registered trademark) disk, a magnetic strip, and the like. The storage 1003 can be referred to as an auxiliary storage device. The recording medium can be, for example, a database including at least one of the memory 1002 and the storage 1003, a server, or other appropriate medium.

The communication device 1004 is hardware (transmission/reception device) capable of performing communication between computers via at least one of a wired network and a wireless network. The communication device 1004 is also referred to as, for example, a network device, a network controller, a network card, a communication module, and the like.

The communication device 1004 may include a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may have an integrated configuration (for example, a touch screen).

Also, the respective devices such as the processor 1001 and the memory 1002 are connected to each other with the bus 1007 for communicating information. The bus 1007 may be constituted by a single bus or may be constituted by different buses for each device-to-device.

Further, the device may be configured to include hardware such as a microprocessor, a Digital Signal Processor (DSP), an Application Specific Integrated Circuit (ASIC), a Programmable Logic Device (PLD), and a Field Programmable Gate Array (FPGA). Some or all of these functional blocks may be realized by means of this hardware. For example, the processor 1001 may be implemented by using at least one of the above-described items of hardware.

Further, notification of information is not limited to that in the aspect/embodiment described in the present disclosure, and may be performed by using other methods. For example, notification of information may be performed by physical layer signaling (for example, Downlink Control Information (DCI), Uplink Control Information (UCI)), higher layer signaling (for example, RRC signaling, Medium Access Control (MAC) signaling), broadcast information (Master Information Block (MIB), System Information Block (SIB)), other signals, or a combination thereof. The RRC signaling may also be referred to as an RRC message, for example, or may be an RRC Connection Setup message, an RRC Connection Reconfiguration message, or the like.

Each aspect/embodiment described in the present disclosure can be applied to at least one of Long Term Evolution (LTE), LTE-Advanced (LTE-A), SUPER 3G, IMT-Advanced, the 4th generation mobile communication system (4G), the 5th generation mobile communication system (5G), Beyond 5G, 6G, Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), a system using any other appropriate system, and a next-generation system that is expanded based on these. Further, a plurality of systems may be combined (for example, a combination of at least one of LTE and LTE-A with 5G) and applied.

The order of the processing procedures, sequences, flowcharts, and the like of each aspect/embodiment described in the present disclosure may be exchanged as long as there is no contradiction. For example, the methods described in the present disclosure present the elements of the various steps by using an exemplary order and are not limited to the presented specific order.

The specific operation that is performed by a base station in the present disclosure may be performed by its upper node in some cases. In a network constituted by one or more network nodes having a base station, it is obvious that the various operations performed for communication with the terminal may be performed by at least one of the base station and other network nodes other than the base station (for example, an MME, an S-GW, and the like may be considered, but there is not limited thereto). In the above, an example in which there is one network node other than the base station is explained; however, a combination of a plurality of other network nodes (for example, an MME and an S-GW) may be used.

Information and signals (information and the like) can be output from a higher layer (or lower layer) to a lower layer (or higher layer). These may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by using a value (0 or 1) represented by one bit, by truth-value (Boolean: true or false), or by comparison of numerical values (for example, comparison with a predetermined value).

Each of the aspects/embodiment described in the present disclosure may be used separately or in combination, or may be switched in accordance with the execution. In addition, notification of predetermined information (for example, notification of "is X") is not limited to being performed explicitly, and it may be performed implicitly (for example, without notifying the predetermined information).

Regardless of being referred to as software, firmware, middleware, microcode, hardware description language, or some other name, software should be interpreted broadly to mean instructions, an instruction set, code, a code segment, program code, a program, a subprogram, a software module, an application, a software application, a software package, a routine, a subroutine, an object, an executable file, an execution thread, a procedure, a function, and the like.

Further, software, instruction, information, and the like may be transmitted and received via a transmission medium. For example, when software is transmitted from a website, a server, or another remote source by using at least one of a wired technology (a coaxial cable, an optical fiber cable, a twisted pair cable, a Digital Subscriber Line (DSL), or the like) and a wireless technology (infrared light, microwave, or the like), then at least one of these wired and wireless technologies is included within the definition of the transmission medium.

Information, signals, or the like described in the present invention may be represented by using any of a variety of different technologies. For example, data, an instruction, a command, information, a signal, a bit, a symbol, a chip, or the like that may be mentioned throughout the above description may be represented by a voltage, a current, an electromagnetic wave, a magnetic field or magnetic particles, an optical field or photons, or a desired combination thereof.

It should be noted that the terms described in the present disclosure and terms necessary for understanding the present disclosure may be replaced with terms having the same or similar meanings. For example, at least one of a channel and a symbol may be a signal (signaling). A signal may also be a message. Further, a Component Carrier (CC) may be referred to as a carrier frequency, a cell, a frequency carrier, or the like.

The terms "system" and "network" used in the present disclosure can be used interchangeably.

Furthermore, information, parameters, and the like described in the present disclosure can be represented by an absolute value, can be represented by a relative value from a predetermined value, or can be represented by corresponding other information. For example, a radio resource can be indicated using an index.

Names used for the above parameters are not restrictive names in any respect. In addition, formulas and the like using these parameters may be different from those explicitly disclosed in the present disclosure. Since the various channels (for example, a PUCCH, a PDCCH, or the like) and information elements can be identified by any suitable names, the various names allocated to these various channels and information elements shall not be restricted in any way.

In the present disclosure, the terms such as "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. A base station may also be referred to with a term such as a macro cell, a small cell, a femtocell, or a pico cell.

A base station can accommodate one or more (for example, three) cells (also referred to as sectors). In a configuration in which a base station accommodates a plurality of cells, the entire coverage area of the base station can be divided into a plurality of smaller areas. In each of the smaller areas, a communication service can be provided by a base station subsystem (for example, a small base station for indoor use (remote radio head: RRH)).

The term "cell" or "sector" refers to a part or all of the coverage area of at least one of a base station and a base station subsystem that performs a communication service in this coverage.

In the present disclosure, the terms such as "mobile station (Mobile Station: MS)", "user terminal", "user equipment (User Equipment: UE)", and "terminal" can be used interchangeably.

A mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms by those skilled in the art.

At least one of a base station and a mobile station may be called a transmitting device, a receiving device, a communication device, or the like. Note that at least one of a base station and a mobile station may be a device mounted on a moving body, a moving body itself, or the like. The moving body may be a vehicle (for example, a car, an airplane, or the like), an unmanned moving body (a drone, a self-driving car, or the like), or a robot (manned type or unmanned type). At least one of a base station and a mobile station also includes a device that does not necessarily move during the communication operation. For example, at least one of a base station and a mobile station may be an Internet of Things (IoT) device such as a sensor.

Also, a base station in the present disclosure may be substituted with a mobile station (user terminal, hereinafter the same). For example, each aspect/embodiment of the present disclosure may be applied to a configuration in which communication between a base station and a mobile station is replaced with communication between a plurality of mobile stations (for example, this may be called Device-to-Device (D2D), Vehicle-to-Everything (V2X), or the like). In this case, the mobile station may have the function of a base station. In addition, words such as "uplink" and "downlink" may also be substituted with words corresponding to inter-terminal communication (for example, "side"). For example, an uplink channel, a downlink channel, or the like may be substituted with a side channel.

Similarly, the mobile station in the present disclosure may be read as a base station. In this case, the base station may have the function of the mobile station. A radio frame may be composed of one or more frames in the time domain. Each of the one or more frames in the time domain may be referred to as a subframe. A subframe may be further composed of one or more slots in the time domain. The subframe may be a fixed time length (for example, 1 ms) independent of the numerology.

The numerology may be a communication parameter applied to at least one of transmission and reception of a certain signal or channel. The numerology may indicate at least one of, for example, subcarrier spacing (SCS), bandwidth, symbol length, cyclic prefix length, transmission time interval (TTI), the number of symbols per TTI, radio frame configuration, a specific filtering process performed by a transceiver in the frequency domain, a specific windowing process performed by a transceiver in the time domain, and the like.

A slot may be composed of one or more symbols (Orthogonal Frequency Division Multiplexing (OFDM)) symbols, Single Carrier Frequency Division Multiple Access (SC-FDMA) symbols, and the like) in the time domain. A slot may be a unit of time based on the numerology.

A slot may include a plurality of minislots. Each minislot may be composed of one or more symbols in the time domain. A minislot may be called a subslot. A minislot may be composed of fewer symbols than slots. A PDSCH (or PUSCH) transmitted in time units greater than the minislot may be referred to as a PDSCH (or PUSCH) mapping type A. A PDSCH (or PUSCH) transmitted using a minislot may be referred to as a PDSCH (or PUSCH) mapping type B.

Each of a radio frame, subframe, slot, minislot, and symbol represents a time unit for transmitting a signal. A radio frame, subframe, slot, minislot, and symbol may have respectively different names corresponding to them.

For example, one subframe may be called a transmission time interval (TTI), a plurality of consecutive subframes may be called a TTI, and one slot or one minislot may be called a TTI. That is, at least one of the subframe and TTI may be a subframe (1 ms) in the existing LTE, a period shorter than 1 ms (for example, 1-13 symbols), or a period longer than 1 ms. Note that, a unit representing TTI may be called a slot, a minislot, or the like instead of a subframe.

Here, a TTI refers to the minimum time unit of scheduling in radio communication, for example. For example, in the LTE system, the base station performs scheduling for allocating radio resources (frequency bandwidth, transmission power, and the like that can be used in each user terminal) to each user terminal in units of TTI. The definition of TTI is not limited to this.

A TTI may be a transmission time unit such as a channel-encoded data packet (transport block), a code block, or a code word, or may be a processing unit such as scheduling or link adaptation. When a TTI is given, a time interval (for example, the number of symbols) in which a transport block, a code block, a code word, and the like are actually mapped may be shorter than TTI.

When one slot or one minislot is called a TTI, one or more TTIs (that is, one or more slots or one or more minislots) may be the minimum time unit of the scheduling. The number of slots (minislot number) constituting the minimum time unit of the scheduling may be controlled.

A TTI having a time length of 1 ms may be referred to as an ordinary TTI (TTI in LTE Rel. 8-12), a normal TTI, a long TTI, an ordinary subframe, a normal subframe, a long subframe, a slot, and the like. A TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, and the like) may be read as a TTI having a time length exceeding 1 ms, and a short TTI (for example, shortened TTI) may be read as a TTI having a TTI length of less than a TTI length of a long TTI and a TTI length of 1 ms or more.

A resource block (RB) is a resource allocation unit in the time domain and the frequency domain, and may include one or more consecutive subcarriers in the frequency domain. The number of subcarriers included in the RB may be the same regardless of the numerology, and may be 12, for example. The number of subcarriers included in the RB may be determined based on the numerology.

Further, the time domain of an RB may include one or more symbols, and may have a length of 1 slot, 1 minislot, 1 subframe, or 1 TTI. Each TTI, subframe, or the like may be composed of one or more resource blocks.

Note that, one or more RBs may be called a physical resource block (PRB), a sub-carrier group (SCG), a resource element group (REG), a PRB pair, a RB pair, and the like.

A resource block may be configured by one or more resource elements (REs). For example, one RE may be a radio resource domain of one subcarrier and one symbol.

A bandwidth part (BWP) (which may be called a partial bandwidth or the like) may represent a subset of consecutive common resource blocks (RBs) for a certain numerology in a certain carrier. Here, the common RB may be specified by an index of the RB based on the common reference point of the carrier. A PRB may be defined in a certain BWP and numbered within that BWP.

A BWP may include a BWP for UL (UL BWP) and a BWP for DL (DL BWP). One or more BWPs may be set in one carrier for the UE.

At least one of the configured BWPs may be active, and the UE does not have to expect to transmit and receive predetermined signals/channels outside the active BWP. Note that "cell", "carrier", and the like in this disclosure may be read as "BWP".

The above-described structures such as a radio frame, a subframe, a slot, a minislot, and a symbol are merely examples. For example, structures such as the number of subframes included in a radio frame, the number of slots per subframe or radio frame, the number of minislots included in a slot, the number of symbols and RBs included in a slot or minislot, the number of subcarriers included in RBs, and the number of symbols included in a TTI, a symbol length, the cyclic prefix (CP) length, and the like can be changed in various manner.

The terms "connected", "coupled", or any variations thereof mean any direct or indirect connection or coupling between two or more elements, and can include that one or more intermediate elements are present between two elements that are "connected" or "coupled" to each other. The coupling or connection between the elements may be physical, logical, or a combination thereof. For example, "connection" may be substituted with "access". In the present disclosure, two elements can be "connected" or "coupled" to each other by using at least one of one or more wires, one or more cables, and one or more printed electrical connections, and as some non-limiting and non-exhaustive examples, by using electromagnetic energy having wavelengths in the radio frequency domain, a microwave region, and a light (both visible and invisible) region, and the like.

A reference signal may be abbreviated as RS and may be called a pilot according to applicable standards.

As used in the present disclosure, the phrase "based on" does not mean "based only on" unless explicitly stated otherwise. In other words, the phrase "based on" means both "based only on" and "based at least on".

"Means" in the configuration of each device above may be replaced with "unit", "circuit", "device", and the like.

Any reference to elements using a designation such as "first", "second", or the like used in the present disclosure generally does not limit the amount or order of those elements. Such designations can be used in the present disclosure as a convenient method to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive-OR.

Throughout the present disclosure, for example, during translation, if articles such as a, an, and the in English are added, the present disclosure may include that a noun following these articles is used in plural.

As used in this disclosure, the term "determining" may encompass a wide variety of actions. "determining" includes deeming that determining has been performed by, for example, judging, calculating, computing, processing, deriving, investigating, searching (looking up, search, inquiry) (for example, searching in a table, database, or another data structure), ascertaining, and the like. In addition, "determining" can include deeming that determining has been performed by receiving (for example, receiving information), transmitting (for example, transmitting information), inputting (input), outputting (output), access (accessing) (for example, accessing data in a memory), and the like. In addition, "determining" can include deeming that determining has been performed by resolving, selecting, choosing, establishing, comparing, and the like. That is, "determining" may include deeming that "determining" regarding some action has been performed. Moreover, "determining" may be read as "assuming", "expecting", "considering", and the like.

In the present disclosure, the wording "A and B are different" may mean "A and B are different from each other". It should be noted that the wording may mean "A and B are each different from C". Terms such as "separate", "couple", or the like may also be interpreted in the same manner as "different".

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

Reference Signs List

    10 Radio communication system
    100, 150A to 150D Radio base station
    200 UE
    300 Radio relay device
    301 Relay antenna
    303 Variable unit
    330 Control unit
    350 Transmission/reception unit
    C Cell
    OB Obstacle
    1001 Processor
    1002 Memory
    1003 Storage
    1004 Communication device
    1005 Input device
    1006 Output device
    1007 Bus

**Claims**

1. A radio relay device comprising:

    a control unit that controls a relay state when a radio wave from a radio base station or a terminal is relayed without signal interpretation; and
    a transmission/reception unit that transmits or receives a signal related to detection or identification to/from the radio base station or the terminal.

2. The radio relay device according to claim 1, wherein the transmission/reception unit receives the signal for finding the radio base station or the terminal, or transmits the signal for finding the radio relay device.

3. The radio relay device according to claim 1 or 2, wherein the transmission/reception unit receives information related to the terminal from the radio base station.

4. The radio relay device according to any one of claims 1 to 3, wherein the radio relay device assumes that the terminal receives information related to the radio relay device from the radio base station.

5. The radio relay device according to any one of claims 1 to 4, wherein the control unit controls the relay state by controlling at least one of reflection, transmission, aggregation, diffraction, and signal power change of a radio wave from the radio base station or the terminal, and a reception or transmission beam.

6. A radio relay method comprising:

    a control step of controlling a relay state when a radio wave from a radio base station or a terminal is relayed without signal interpretation; and
    a transmission/reception step of transmitting or receiving a signal related to detection or identification to/from the radio base station or the terminal.

FIG. 1

# FIG. 2

# FIG. 3

# FIG. 4

MOVE TO RADIO QUIET ZONE

## FIG. 5

## FIG. 6

# FIG. 7

# FIG. 8

# FIG. 9

FIG. 10

100

CONTROL
INFORMATION

300

RIS

200

FIG. 11

100

300

RIS

200

CONTROL
INFORMATION

FIG. 12

100

300

RIS

200

# FIG. 13

# FIG. 14

# FIG. 15

BM

300

PRACH/SRS TX

200

100

# FIG. 16

200          300

UE          RIS

SIGNAL
SB-1

SIGNAL
SB-2

SIGNAL
SB-3

# FIG. 17

100, 200, 300

| | |
|---|---|
| 1001<br>PROCESSOR | 1007 | 1004<br>COMMUNICATION DEVICE |
| 1002<br>MEMORY | | 1005<br>INPUT DEVICE |
| 1003<br>STORAGE | | 1006<br>OUTPUT DEVICE |

| INTERNATIONAL SEARCH REPORT | International application No. |
|---|---|
| | PCT/JP2021/011531 |

**A.   CLASSIFICATION OF SUBJECT MATTER**
Int.Cl.  H04B7/145(2006.01)i
FI: H04B7/145

According to International Patent Classification (IPC) or to both national classification and IPC

**B.   FIELDS SEARCHED**

Minimum documentation searched (classification system followed by classification symbols)
Int.Cl.  H04B7/145

Documentation searched other than minimum documentation to the extent that such documents are included in the fields searched
      Published examined utility model applications of Japan      1922-1996
      Published unexamined utility model applications of Japan      1971-2021
      Registered utility model specifications of Japan      1996-2021
      Published registered utility model applications of Japan      1994-2021

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| X<br>Y | JP 2011-211515 A (NTT DOCOMO, INC.) 20 October 2011 (2011-10-20), paragraphs [0032]-[0039], [0042], [0103], fig. 6-8 | 1-2, 4-6<br>3 |
| Y | US 2016/0057722 A1 (WIZN SYSTEMS PVT. LTD.) 25 February 2016 (2016-02-25), paragraph [0039], fig. 1 | 3 |
| A | JP 2020-129401 A (POWERCAST CORPORATION) 27 August 2020 (2020-08-27), paragraph [0023] | 1-6 |

☐   Further documents are listed in the continuation of Box C.        ☒   See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 April 2021 | 13 April 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

| INTERNATIONAL SEARCH REPORT | International application No. |
| --- | --- |
| Information on patent family members | PCT/JP2021/011531 |

| | | | |
| --- | --- | --- | --- |
| JP 2011-211515 A | 20 October 2011 | US 2011/0244786 A1 paragraphs [0052]-[0059], [0063], [0124], fig. 6-8 EP 2372842 A2 CN 102208939 A | |
| US 2016/0057722 A1 | 25 February 2016 | (Family: none) | |
| JP 2020-129401 A | 27 August 2020 | WO 2013/142733 A1 paragraph [1044] US 2013/0250845 A1 EP 3244510 A1 CA 2867856 A1 CN 104321950 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NTT DOCOMO.** *DOCOMO 6G White Paper version 3.0,* February 2021, https://www.nttdocomo.co.jp/corporate/technology/whitepaper_6g
- **VENKAT ARUN ; HARI BALAKRISHNAN.** RFocus: Beamforming Using Thousands of Passive Antennas. *17th USENIX Symposium on Networked Systems Design and Implementation (NSDI '20), February 25-27, 2020, Santa Clara, CA, USA,* 25 February 2020, 1047-1061

- **QINGQING WU ; RUI ZHANG.** Intelligent Reflecting Surface Enhanced Wireless Network via Joint Active and Passive Beamforming. *IEEE TRANSACTIONS ON WIRELESS COMMUNICATIONS,* November 2019, vol. 18 (11), 5394-5409